# EUROPEAN PATENT APPLICATION

(11) **EP 0 968 658 A1**
(43) Date of publication of application: **05.01.2000**
(21) Application number: 98202209.7
(22) Date of filing: 02.07.1998
(51) Int. Cl.: A23K 1/16, A23L 1/304

(54) **Feed additives comprising ethylene diamine disuccinic acid as a chelant**

(71) Applicant: Akzo Nobel N.V., 6824 BM Arnhem (NL)
(72) Inventor: Wreesman, Carel Theo Jozef, 1412 HR Naarden (NL)
(74) Representative: Schalkwijk, Pieter Cornelis

(57) **Abstract**

The invention pertains to a process to enhance the uptake of metal ions from feed or drinking water by animals. The more efficient uptake may result in lower additive levels of copper compounds and a lower concentration of undesired metals in manure.

## Description

The present invention relates to compositions to be used as additives to animal feed (or drinking water) for facilitating the uptake of metal, particularly copper or zinc, ions by the animal and to lower the environmental impact of the use of said metal ions, or complexes thereof, as regularly used in said feed.

The use of metal sources in animal feed is a long established practice. Over the years, especially the addition of copper salts or copper complexes to animal feed or drinking water has gained significance because such practice was found to improve the conversion of feed to meat, also known as feed utilization. Ways were sought to further improve said feed utilization. In J. of Anim. Sci., Vol.37, No.1, 1973, pp95-103, a comparison was made between the addition of metal sources in the regular form and as chelates of EDTA. It was concluded that there were no significant differences in efficiency of feed utilization. More recently, the use of copper-lysine complexes received considerable attention. See, for instance, J. of Anim. Sci. 1996, no.74, pp1594-1600. Again, the absorption and retention of copper was similar for pigs fed growth-stimulative levels of copper from either CuSO₄ or copper lysine complex. Furthermore, it was observed that for the pigs fed copper supplements, the amount of copper in the faeces increased considerably.

Similarly, zinc methionine has been proposed for increasing zinc levels in animals. However, this conventional zinc complex was found not to be very effective either.

Accordingly, when it is desired to increase the metal uptake by animals, e.g. to increase feed utilization, by the addition of metal salts or complexes to feed or drinking water, one is generally confronted with a relatively poor uptake of the metal. This is a problem from an economical point of view, since more of the metal source is used than is necessary, and from an environmental point of view, since the amount of metal in the manure is higher than desired.

Surprisingly, we have now found that the use of specific metal complexes solves both these problems. More particularly, we have found that the use of metal complexes of chelates containing aspartic acid groups results in very good metal uptake from the feed or drinking water. This makes it possible to lower the amount of metal in the feed or drinking water without the feed utilization being adversely affected. Also, the aspartic acid group-containing complexing agent according to the invention is (partly) degraded in the body, resulting in a lower environmental impact.

Incidentally, it was noted that the use of the novel metal chelates also solves another problem that has often been observed with chelates that are not degraded in the body. For instance, from chelation therapy practice it is well-known that EDTA or complexes thereof when administered to a living body are hardly metabolized, but will leave the body complexing the same or another metal ion. Accordingly, when high amounts of such EDTA complexes are present in the feed, the animal will excrete EDTA complexes of various metals. Hence, metals may be removed from the body, which in healthy animals is undesired. The new chelates do not suffer from this problem because the complexing agent is degraded. Furthermore, it is noted that the complexing agents according to the invention, in particular S,S-EDDS, is known to biodegrade when released into the environment. Hence, even if not all of the complexing agent is degraded in the body, it still has a very low environmental impact.

The aspartic acid group containing complexing agents that are used in the chelates according to the invention are characterized in that they possess at least one aspartic moiety with the chemical structure depicted below

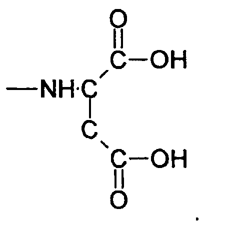

Preferably, the complexing agent has a critical stability constant (log K, 20°C, 0.1) of greater than 10 for both zinc and copper. More preferably, the critical stability constant is greater than 12.5.

By choosing a complexing agent comprising the aspartic group and, preferably, with said critical stability constant, the animal will take up metal that is chelated in a very efficient way.

Without being bound or limited by the following theory, we believe that the aspartic group is, unexpectedly, strong enough to complex the metal during the passage through the stomach, unlike in the case of weaker chelates such as lysine or methionine complexes of metals. Therefore, it appears that the metal keeps being chelated in the stomach and does not form a complex with the phosphates and/or carbonates that are also present in the feed. Conventional metal salts and weaker complexes of said metals, such as lysine and methionine complexes, however, will form such phosphate and/or carbonate complexes that are hardly metabolized and, accordingly, are excreted without the animal being able to benefit from them. The fact that metal ions can precipitate with phosphates and/or carbonates is well-known and is used, for instance, in testing methods to evaluate whether or not metals in a certain solution are fully chelated. In this respect, reference is made to, inter alia, Technical Leaflet 209 of Akzo Nobel-Functional Chemicals, code T16.209.96.06.

According to the same, non-binding, theory, conventional stronger metal chelates, such as EDTA complexes, will also pass the stomach unaltered, much like the chelates according to the invention. However, unexpectedly, the aspartic group or groups of the chelates according to the invention will break down in the bowels of the animal or after absorption in the tissues. The metal that was chelated is then liberated in a form from which the animal can benefit. This is in sharp contrasts to the situation in which stronger metal chelates are used that are not broken down, as is the case with conventional chelates. These conventional chelates will pass the body and result in the uneconomical and environmentally unfriendly excretion of metal complexes. While the metal being chelated by the conventional complexing agent may be the same or different, in all cases valuable minerals are wasted by using such complexing agents.

Preferred examples of complexing agents according to the invention are isomers of ethylene diamine disuccinic acid (EDDS). Most preferred is the use of S,S-EDDS.

Most preferred of the chelates that are used as feed or drinking water additive are the copper and zinc complexes with said complexing agents. Most preferred are the copper and zinc complexes of S,S-EDDS.

The chelates according to the invention can be used in any desired concentration in either the feed or the drinking water. However, because of their much more efficient uptake, they preferably are used in a concentration which is less than half of that of conventional copper salts and/or chelates. Conventional dosage levels being as high as 200 mg/kg added dietary metal, the dosage level of the chelates according to the invention preferably is such that less than 100 mg/kg of metal is present in the feed or drinking water. More preferably, the metal is present in concentrations below 50 mg/kg in feed and less than 10 mg/kg in drinking water.

The metal chelates according to the invention can be used as a supplement in the feed of a variety of animals. Preferably, they are used as a feed additive for poultry or mammals. More preferably, they are used as an additive in the feed of cattle or swine. However, they can also be used as a supplement to the food of humans.

### Experimental

S,S-EDDS was prepared by reacting 75 g of L-aspartic acid with 29 g of 1,2-dibromoethane at 85°C for 4 hours in 150 g of water which was kept at a pH of 10.2 by means of a 50% by weight NaOH solution. Resulting S,S-EDDS was precipitated by the addition of HCl to a pH of 3, filtered and washed with water of pH 3 (obtained by adding HCl to the water). Approximately 25 g S,S-EDDS was obtained.
The copper chelate of S,S-EDDS was prepared by dissolving the wet filter cake (containing approximately 0.083 mole of S,S-EDDS) in water of which the pH is maintained at 8 by means of a 50% NaOH solution, and adding 0.075 mole of CuNO₃ while stirring. The formed solution containing the copper chelate of S,S-EDDS can be used as a supplement in drinking water, can be used to formulate feed, or can be dried in ways as known in the art in order to obtain a powder. Alternatively, the copper chelate can be purified before use.

## Claims

1. Process to enhance the uptake of metals by humans or animals by administering said metals in the form of a chelate, characterized in that the complexing agent in said chelate comprises at least one moiety of structure

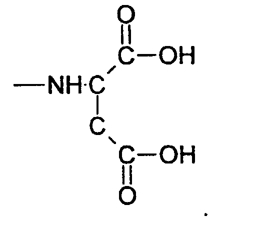

2. Process according to claim 1, characterized in that the complexing agent has a critical stability constant, log K, of more than 10 (20°C, 0.1).

3. Process according to claim 1 or 2, characterized in that the chelate is administered in the feed or in drinking water.

4. Process according to claim 3, characterized in that the concentration of the metal that is administered in said chelate form is less than 100 mg/kg based on the weight of the feed or the drinking water.
